# EUROPEAN PATENT APPLICATION

(11) **EP 1 520 889 A1**
(43) Date of publication of application: **06.04.2005**
(21) Application number: 04077428.3
(22) Date of filing: 30.08.2004
(51) Int. Cl.: C09D 175/00, B32B 17/10

(54) **Use of resins for application on the surfaces of glass or similar objects**

(30) Priority: 29.08.2003 ES 200302046
(71) Applicant: Safeglass S.L., 08002 Barcelona (ES)
(72) Inventor: Perez Blanco, Francisco Javier, 08002 Barcelona (ES)
(74) Representative: Esteban Perez-Serrano, Maria Isabel

(57) **Abstract**

The use of resins for application on glass surfaces is disclosed. By the external resin layer on the surface of the glass object the glass particles remain joined together in case of breakage, thereby reducing the danger which might be caused to individuals.

## Description

This invention patent application consists of the use of resins on the surfaces of glass or similar objects, the new properties of which provide numerous advantages as are detailed in this document.

Glass has for a long time been an important component in a multitude of applications. Examples of these uses are the manufacture of washbasins and similar domestic objects, safety glass for façades, vehicles, etc. However, glass is a fragile material with little strength in traction; its breakage creates a multitude of small fragments. These fragments are a potentially danger for the user, which could be a very high depending on the specific applications of the glass of objector that has broken. This is mainly due to the random way in which glass breaks.

The breakage of a glass object is a very common accident that occurs through the direct impact of an object against the glass. There are various technical alternatives prevent to damage as far as possible. One of these is to give the glass a greater thickness to provide it with greater resistance to the impact. Clearly however this increases its weight, cost and the aesthetic impact of thicker glass is very inconvenient, making this answer unviable for many applications.

Another answer is to use what is technically known as safety glass. For example, laminated safety glass is used in building and in manufacturing car windscreens, obtained by placing a thin sheet of transparent plastic (polyvinyl butyl, PVB) between two thin layers of glass. The polyvinyl butyl sticks to the glass and keeps together the pieces that form when the glass breaks after an impact, without shedding any large piece.

One of the advantages of laminated safety glass is that it allows the transparency of glass while at the same time the polyvinyl butyl provides elasticity with a high resistance to perforation. Another advantage of laminated safety glass that has just received an impact is that it does not need to be replaced immediately since many pieces of glass remain stuck together thanks to the polyvinyl butyl layer. This layer absorbs the energy of the impact and retains its adherence to the glass so that the pieces produced during the breakage do not scatter from the layer, and the whole assembly remains in one piece. This considerably reduces the risk of injuries and/or material damages, providing safety to persons and goods that are near the glass.

Examples of these safety glasses are that described in the Spanish patent number ES530.008 that refers to a procedure for manufacturing a safety glass windscreen that reduces the fragments formed by an impact to the glass. The glass is manufactured from a layer of glass and a layer of plastic material by stamping a layer based on vinyl/acrylic/urethane onto the glass sheet.

Spanish patent number ES2.171.561 describes a procedure for improving the impact resistance of a laminated light transmitting panel. This is light transmitting laminated panel with a great resistance to breakage through impact. It consists of a sheet of glass, a transparent sheet of a plasticized polyvinyl butyl matrix with particles of polyvinyl butyl encrusted randomly throughout the matrix, which improves the resistance to impacts of the panel and are visually indistinguishable from the polyvinyl butyl matrix, and, finally, another sheet of glass. Before the laminated panel is prepared, an amount of up to 40 per cent in weight of particles are incorporated into the polyvinyl butyl matrix.

Tempered glass can be obtained through chemical processes. The purpose is to reinforce the surface of the glass chemically by exchanging ions at a high temperature or through thermal processes which involve heating to plasticization and rapid cooling with air.

The heat treating of glass gives it a higher resistance to traction (mechanical or thermal) without changing its colour, transparency or properties. In this case, tempered glass is used for many applications, due to its great resistance to heat, bending and pressure. It also has advantages in that when it breaks, it forms a multitude of small, blunt fragments, thus preventing cuts and other injuries to nearby persons. This type of glass is used in windows, cars, industrial cabins, shop windows, etc. However, one of the limitations of tempered the glass is that, due to its hardness, it cannot be worked on after the tempering process.

The types of safety glasses described can be combined to manufacture glasses consisting of various sheets of tempered glass and joined with layers of polyvinyl butyl.

Other means of manufacturing safety glass have involved at least one intermediate layer of polyvinyl butyl between a layer of polycarbonate and the glass, although, in practice, it has been shown that the adhesion is not sufficient so that it is necessary to use a plasticizer. Nevertheless, it has also been seen that the plasticizer affects the physical properties of the finished product, especially regarding light transmission.

Alternative solutions to the above are the arrangement of a polyurethane layer to join the polycarbonate and the glass or the use of an ionomeric resin in a layer of stratified glass as described in patent number ES642.042. The use of ionomeric resins to reinforce the glass sheets to form layered safety glass is well-known technically. It is also used to make high strength sheets of stratified plastic or combinations of sheets of plastic and glass with the application of layers of resin between them.

Patent number ES2.153.881 describes a panel of safety and fireproof glass that includes a layer of fire-resistant glass and a film of fluorocarbon resin with a chain-type molecular structure. The film is fixed to one of the side surfaces opposite the glass sheet by heat compression. The fluorocarbon resin is a co-polymer of at least three types of monomers. Another fluorocarbon resin film can be added to the other side surface of the glass sheet by heat compression. Another layer of glass can be incorporated so that several layers of glass are joined to the fluorocarbon resin film previously placed between the adjacent layers of glass by heat compression.

International patent application number W001/14137 describes a reinforced safety glass that consists of a layer of flat glass, a layer of an organic resin and a layer of an organic polymer.

Other examples of multi-layer safety glass are those described in international patent application number W003/039867, that describes one of these layers for use in glass laminates. The layer consists of at least five layers in which at least one is a polyester and another has a multi-layered structure that consists of at least two types of thermoplastic resin.

This invention proposes an alternative to the solutions described with reference to the above technique with which it is possible to obtain a safety glass from conventional glass simply and especially effectively without using costly manufacturing processes for interweaving intermediate sheets or layers of reinforcement material. Its purpose is to provide the glass with safety to protect persons from the potential danger of its breakage.

The invention proposes the use of resins to be applied on the services of the glass or similar objects, for example in heat-shaped glass or tempered glass, to give them an external surface finish. This external surface finish applied to the object to be treated keeps the particles produced by a breakage through impact or similar together, protecting nearby persons from the danger that could be caused by these glass or similar particles.

The use proposed by this invention provides a safety glass with a surprising efficiency in protecting persons against the accidental impact breakage of the object to which the resin is applied, all of this with a very reduced cost in comparison to glass objects with some safety treatment such as those described with the above techniques. Another advantage of the invention is that the glass objects treated with it and that, as a result, have a greater degree of safety, do not undergo an increase in weight or variation in their physical properties nor in their mechanical properties. Still another important advantage of the use of the invention is its versatility due to its wide range of applications since the resin can be applied by a procedure described below to any type of object, body or surface regardless of its shape. Special mention must be made of the use of the invention applied to glass or similar (ceramic, etc) conventional objects, already on the market, so it is not necessary to modify their production process, with the advantage, compared to previous techniques, that safety glass can be obtained in any shape, not being limited to sheets or other flat surfaces.

In general terms, resins are macromolecular compounds (natural or synthetic) that have conventionally been used in the wood, plastic, paints, adhesive, etc, industries. Resins are solid or pseudo-solid substances, normally with high molecular weight and undefined fusion point. Depending on their origin, the resins may be natural (generally of vegetable origin), artificial (produced by chemically modifying fatty acids, natural resins or other macromolecular substances) and synthetic (from controlled chemical reactions using defined materials that, in themselves, do not have a resinous properties). The chemical constitution of resins allows them to reticulate under the action of catalyser or a hardener, passing from the liquid to the solid state. This reaction is produced without requiring heat and is frequently exothermic. The use of additives and other elements to the resin is well known, to modify their properties for specific applications. Accelerators are used to increase the speed of hardening of synthetic resins as well as catalyses or initiators to start of the reaction between two or more products.

Known applications for resins include, for example, functions as adhesive, conglomerates for dry materials, resins for glues and as a material for injection in masonry or on site.

Although this invention is not limited to a specific type of resin, it has been found that polyurethane, epoxy and polyester resins (or combinations of these) are preferable for the purpose of this invention.

Polyurethane resins have a great adhesion and are used in paints and surface treatments as well as for sealing porous surfaces against humidity. They have a good hardness as well as great chemical resistance and high resistance to abrasion. They are also very flexible and very resistant to water as well as having an acceptable resistance to fuels.

Polyester resins have excellent chemical and mechanical properties with great resistance to impacts, corrosion and excellent resistance to ultraviolet light. Unsaturated polyester resins obtained by poly-condensation of a dyacid with a dialcohol and an unsaturated monomer (styrene) are viscous, amber liquids. The curing or hardening of polyester resins takes place through vinyl polymerisation mechanisms using free radicals that activate the double links of the polyester chains and of the styrene molecules. These radicals are provided by the catalyser and the activator.

Epoxy resins are formed by two components with a rapid polymerisation and a h igh resistance to traction and impact. T hey adhere to m ost materials such as metals, glass, cement, ceramics, wood, plastics, etc. Epoxy resins have a high resistance and hardness and support high temperatures well.

A glass object treated according to the invention has a high degree of safety given that its breakage will not generate loose pieces of glass that could cause a risk to persons or objects nearby given that these pieces remain stuck together due to the presence of the film of resin applied to the exterior surface, that is, the whole remains in a single piece after an impact.

According to the invention, the preferred method of use is that in which these resins are formed by a single component. However, it will be understood that resins formed by at least two components can also be used (for example, epoxy resins as described previously), one of these being an activator. Nevertheless, it is even more preferable, according to the invention, to use polyurethane resins.

Preferably, the resins used for the invention are applied to the objects by spraying. The procedure for applying risen by spraying can be carried out with a bottled spray, and an air compressor of the "airless" type, in which the compressed air is only used to expel the resin, and does not exit mixed with it during its application. To apply a resonant to the object, a suitable primer may be applied first and/or preparation with sand blasting to improve adherents.

The resins can also be applied to glass using a high-volume low-pressure (HVLP) fan. The resins are sprayed onto the glass surface with air in high volume and very low pressure, using an electric fan. This provides a very fine finish, also reducing the amount of resin lost in the spray.

Alternatively, the resins may be applied directly by a brush or roller. According to the invention, of the different means of applying the resins described above, the use of HVLP fans or bottle sprays are preferred for their better finish, leaving the use of HVLP fans for the industrial sector and the use of bottle sprays for the domestic sector. Thus, in the latter case, the user simply has to buy a spray of resin and apply it to the glass as desired (for example, to a window or a washbasin), easily converting conventional glass into safety glass.

The resins used according to the invention have, as an example, the following properties:
- film thickness of between 50 and 125 µm per spray pass or step, depending on the thickness of the object to be treated, the thicker the object the more coats must be sprayed on.
- resistance to traction greater than 200 kg/cm²
- resistance to splitting greater than 70 kg/cm linear.
- stretching of the order of 200%.

The resins may be transparent although one or more pigments can also be used. In the case of transparent resins, thanks to the properties of the resin used, it remains transparent without changing over time thanks to the use of ultraviolet filters, providing an unchanging appearance for the glass object that has been treated. In the case of the use of coloured resins, these may be applied as though they were paint, so that the only step is to apply the colouring to the glass object and, at the same time to give it a protective film.

The features and advantages of the use of this invention will become clearer from the detailed description of its use, given below, as an example, referring to the accompanying attached drawings.

In these drawings:

Figure 1 shows a partial cross section of a piece of glass to which a coat of resin has been applied according to the use of this invention.

Figure 2 is an elevation view showing good diagrammatically a breakage test of a piece of safety glass treated according to this invention, with the impact of a metal ball from a height.

Figure 3 is an elevation of view of the breakage test in Figure 2 once the metal ball has impacted on the glass.

Figure 4 is a plan view of the test glass in Figures 2 and 3, showing the final state after the impact of the ball.

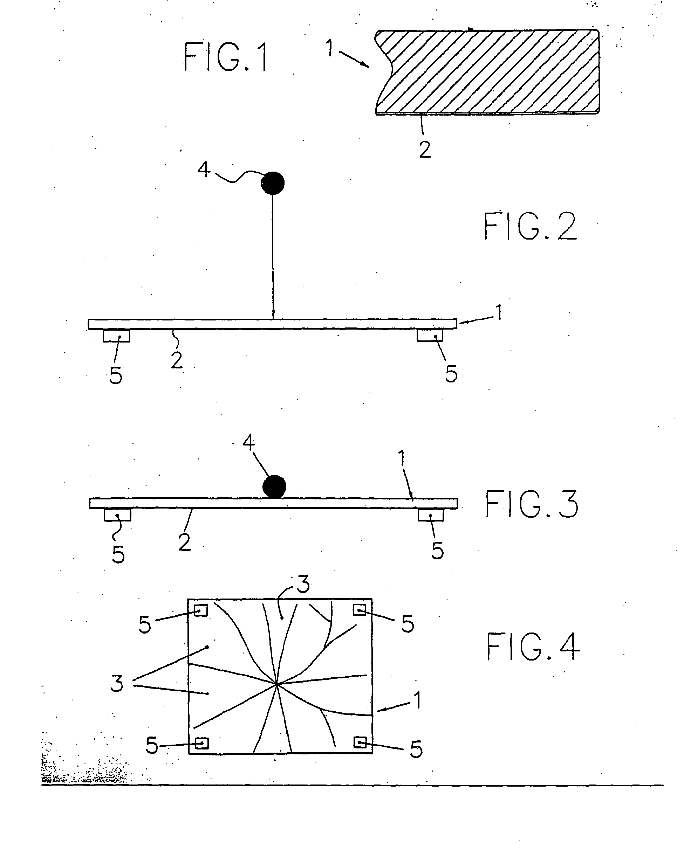

Figure 1 shows as an example a flat piece of glass (1) to which an external safety coat to has been applied as described below. This glass (1) may be conventional, heat shaped or tempered glass.

It should be stated that the shape of the glass is shown in plan for reasons of clarity, it being u nderstood t hat t he advantages o f the u se o f this invention refer to its application to solid or three-dimensional objects.

As has been described, the glass (1) in the attached figures has had a coat of resin (2) applied to form an external surface finish. For glass (1) of 100 mm thick as shown, a coat of resin (2) of 100 µm thick has been applied. However, it will be understood that the thickness of this coat of resin (2) may very depending on the thickness of the glass (1).

The application of the resin provides a safety coat (2) for the glass (1) that prevents the particles (3) produced by a breakage by impact (see the broken glass (1) shown in Figure 4 after an impact breakage test) do not disperse, so that they remain together after the impact. This protects persons nearby from the danger that these particles (3) of glass (1) or similar (for example, ceramics, etc) may cause.

The film (2) applied to the glass (1) may consist of polyurethane resin, epoxy resin, polyester resin or combinations of these, whether of single or multiple components. The resins maybe transparent with an ultraviolet filter to prevent their yellowing or coloured using at least one pigment.

The resin film (2) of the glass (1) shown in the figures is applied by spraying either domestically with a bottle spray or industrially with a high-volume low-pressure (HVLP) fan.

The following describes, with reference to Figures 2, 3 and 4 attached to this document, the impact breakage test of the glass (1) in Figure 1, that has been treated by spraying with an HVLP spray with polyurethane resin to form a safety film (2).

Referring to Figure 1 attached to this document, a metal ball (4) 550 g in weight is dropped from a height of 1 m onto a glass plate (1), as described above, 10 mm thick with a coat of resin (2) 100 µm thick. The glass (1) is a supported on 4 supports (5) placed at the corners of the glass plate (1) as can be seen in the plan view in Figure 4.

After the impact of the ball (4) on the surface of the glass (1) (Figure 3), it can be seen how the glass plate (1) remained in Figure 4. The glass plate (1), which has been treated, as described above, applying a film (2) of safety resins, has cracked radially from the centre where the impact of the ball (4) occurred, defining breakage areas (3).

However, the fragments (3) of the glass plate (1) have not separated from it and form a single body (1). In other words, the metallic ball (4) breaks the safety glass (1) but does not cause the fragments (3) of glass to scatter since they remain joined together thanks to the resin film (2), maintaining the whole in a single piece, previously applied by the means described above. In the test, the metal ball (4) did not manage to perforate the glass (1).

Note that the advantage of the invention is that it can be used on any object of glass (1) or similar varied three-dimensional forms, providing a solid object with very high safety properties after the application of the resin, preventing the fragments (3) caused by the breakage of the object (1) from separating and injuring nearby persons.

Having sufficiently described this invention with attached drawings, it will be understood that any change of detail can be made to it as considered convenient, as long as the essential properties of the invention summarised in it in the following claims are not altered.

## Claims

1. The use of resins for application on the surfaces of glass or similar objects, to produce an external surface finish layer on these objects so that the particles produced by a breakage by impact or similar of these objects remain joined together after it, protecting those persons nearby from the danger that might be caused by these particles of glass or similar.

2. The use according to claim 1, **characterized in that** said resins are selected from the group consisting of polyurethane resins, epoxy resins, polyester resins or combinations of these.

3. The use according to claim 1, **characterized in that** said resins are formed by a single component.

4. The use according to claim 1, charaterized in that said resins are formed by at least two components, one of these being an activator.

5. The use according to claim 1, charaterized in that said resins are polyurethane resins.

6. The use according to claim 1, charaterized in that said resins are applied to the objects by spraying.

7. The use according to claim 6, charaterized in that said resins are applied to the objects using a bottle spray.

8. The use according to claim 6, charaterized in that said resins are applied to the objects by spraying using a compressed air compressor.

9. The use according to claim 6, charaterized in that said resins are applied to the objects by spraying the using a high volume and low pressure spray fan.

10. The use according to claim 1, charaterized in that said resins are applied to the objects directly using a roller, a brush or similar.

11. The use according to any of the above claims charaterized in that said resins are transparent and include an ultraviolet filter.

12. The use according to any of the above claims charaterized in that said resins include at least one pigment.

13. The use according to claim 1, charaterized in that said objects are of heat-shaped glass.

14. The use according to claim 1, charaterized in that said objects are of tempered glass.
